# EUROPEAN PATENT APPLICATION

(11) **EP 4 063 474 A1**
(43) Date of publication of application: **28.09.2022**
(21) Application number: 20889148.1
(22) Date of filing: 24.09.2020
(51) Int. Cl.: C12G 1/02, C12H 1/14, C12H 1/052

(54) **METHOD FOR TREATING MUSTS AND WINES AND PRODUCT FOR IMPLEMENTING SAID METHOD**

(30) Priority: 19.11.2019 ES 201931009; 04.06.2020 ES 202030524
(71) Applicant: Inbiolev, S.L., 31195 Aizoain (ES)
(72) Inventor: GARCÍA YOLDI, David, 31195 Aizoain (ES); PÉREZ SÁEZ, Elisa, 31008 Pamplona (ES); LÓPEZ GOÑI, Ignacio, 31008 Pamplona (ES); SALGADO GÓMEZ, Rafael, 31195 Aizoain (ES)
(86) International application number: PCT/ES2020/070573
(87) International publication number: WO 2021/099655

(57) **Abstract**

The must- and wine-treatment method of the invention consists in adding lysates of lactic acid bacteria during the wine fining and ageing phase in order to reduce astringency, said addition also increasing nitrogenous matter, while the negative z-potential of the lactic acid bacteria and its ability to bond with the K+ and Ca2+ cations favour the retention of the latter, preventing them from bonding to tartaric acid, as well as preventing the formation of crystals of potassium bitartrate and neutral calcium tartrates, thereby stabilising the wine against the precipitation of tartrate salts. Said lysates of lactic acid bacteria may also be used to favour the wine clarifying process and may be in the form of a liquid or dry powder.

## Description

### FIELD OF THE ART

The present invention relates to a process intended to be applied as sub-processes in the wine-making process itself.

More specifically, the process consists of the use of lactic acid bacteria lysates for oenological applications such as the reduction of astringency in wines or the nutrition in must and wine fermentation processes. In the same way and due to the negatively charged nature of the cell wall of lactic acid bacteria, their application for the tartaric stabilisation of wine would be extended.

Finally, the envisaged process is also applicable to wine clarification.

The aim of the invention is therefore to provide a process that enables the production of high quality wines that meet the demands of an increasingly more demanding consumer.

The invention also relates to the product for the application of the method described.

In short, the invention is applicable in the food sector, especially in the winegrowing industry, without ruling out other industries such as beer, cider or any other beverage where the aim is to reduce astringency, stability or eliminate the formation of salts present in other fermentative matrices, as well as in the clarification or reduction of turbidity in beverages.

### BACKGROUND TO THE INVENTION

With regard to the problem of astringency in wines, nowadays, due to climate change and the increasing number of hours of sunshine per year, grapes undergo a natural dehydration that causes a rapid increase in sugars which leads to an increase in the potential alcohol by volume without the grapes having reached phenolic ripeness. This is a problem that entails greenness and astringency in the musts fermented from these grapes.

Winegrowers and wineries are sometimes obliged to harvest the grapes early so that the alcohol content is not too high, without giving the polyphenols in the seeds and skins of the grapes time to ripen and lose their greenness and astringency.

To alleviate this problem in the oenological world products are used in which their application consists of masking the astringency and greenness caused by the grape's polyphenols that have not reached their optimum ripeness or polymerisation over time.

Nowadays, the products used are based on mannoproteins from the *Saccharomyces* genus and *cerevisiae* species. The action of these mannoproteins is to polymerise or bond polyphenols together so that they do not have so many reactive groups in the wine so that they stick or bond with salivary proteins, condense and produce sensations of astringency or dryness in the mouth.

With regard to nutrition in the production process in the oenological industry, lactic acid bacteria lysates, constituted by amino acids, proteins, polysaccharides and specific nucleic acids, represent a unique source of nitrogenous compounds for fermentation processes in the food industry, in particular in the oenological industry. Therefore, the amino acids are aromatic precursors, and the proteins and polysaccharides intervene in the sensory matrix providing structure and weight in the final product as well as increasing glyceric sensations and limpidity by reducing sulphur traces.

With regard to tartaric stabilisation, tartaric acid is one of the major acids in wines, which can be partially insolubilised with the presence of calcium and potassium cations, forming salts. The solubility of these salts decreases during alcoholic fermentation, as well as during wine cooling. Spontaneous insolubilisation of tartares occurs during wine storage and especially during winter, but wines may nevertheless contain a sufficient quantity of these salts in solution and new precipitations can occur when the wine is bottled, which can be avoided with an appropriate stabilisation treatment applied before bottling. In addition, due to the excess of potassium that is frequently found in vineyards all over the world, the wines are more unstable with the appearance of potassium bitartrate (KHT) precipitation. The presence of these small crystals of potassium bitartrate at the bottom of the bottle generally appears as a consequence of a decrease in temperature, but does not constitute a defect. This precipitation is found in smaller quantities or not at all in wines that have undergone a stabilisation process.

Although the presence of these crystals does not negatively affect the taste of the wine, for consumers the presence of these crystalline precipitates denotes a defect and they would reject the wine as they do not know the origin of the precipitate, creating mistrust in the brand.

Among the most widespread treatments at the present there are systems that insolubilise and eliminate tartrate from the wine (cold and reverse osmosis), systems that prevent tartaric precipitation (CMC, mannoproteins and metatartaric acid).

Stabilisation techniques are not well developed as, in addition to eliminating the problem of tartaric precipitation, they can eliminate compounds favourable for the wine such as aromas and polyphenols, thus modifying the organoleptic characteristics of the wine. For this reason it is necessary to further develop these techniques in order to improve the quality of the wine following a tartaric stabilisation process.

Tartaric acid (HT2) is characteristic of grapes. Its content is variable and tends to be lower in southern regions where the temperatures of sunlight exposure of the bunches are higher. Generally, it is HT2 that gives the wine its characteristic pH value (3.00-3.50), which gives it a pleasant sensation of freshness, while an eventual absence makes the wine flat and without body. As is known, the content of HT2 tends to decrease spontaneously over time due to the precipitation of its calcium- (Ca) and K salts. Hence the importance of a tartaric stabilisation treatment to avoid these precipitations in the bottle.

As mentioned above, KHT is formed during the fermentation stage, and in addition, calcium tartrate (CaT) can also be formed. The wine's natural tartaric acid (HT2) is able to combine with the (K) present in the grape. The corresponding salt (KHT) is soluble in the grape must, but much less so when alcohol is present, after fermentation. Naturally, KHT sediments. If no action is taken when the wine is still in the tank, the KHT crystals will settle in the bottles.

Therefore, metals, sulphates, proteins (example of mannoprotein nature) and polyphenols can form complexes with free tartaric acid and potassium ions inhibiting KHT formation.

The complexes formed are mainly between polyphenols and proteins with tartaric acid.

The binding of free tartaric acid prevents the formation of bitartrate.

Mannoproteins or glycoproteins are absorbed on the crystal surface of the crystal core inhibiting their growth.

Among the current tartaric stability treatments, one of the best known is cold treatment, although alternative, more economical and better performing treatments are currently being sought.

Cold treatment requires a high investment in isothermal tanks, cold equipment, high electricity consumption, long treatment duration as well as requiring subsequent filtration.

Reverse osmosis is a technique consisting of placing a wine in contact with a reverse osmosis module, which has a membrane with a suitable molecular cut-off (smaller that that of ultrafiltration). This means that, in the fraction known as permeate, only water and the solutes with lower molecular weight (e.g. acetic acid) pass through, while the most characteristic wine components, which are usually those with the highest molecular weight, are retained in the original matrix (the so-called retained fraction).

The wines are passed through reverse osmosis equipment, where part of the water they contain is temporarily removed, resulting in concentrated wines and producing a significant insolubilisation of the tartrates which can be activated with a complementary cold treatment. Once separated, the water originally separated is restored, therefore stabilising them.

The addition of metatartaric acid is another method that is used on finished wine and entails a cost in product and handling as well as the non-guarantee of stabilisation over long periods. The maximum legal dose is 10g/hL.

Metatartaric acid is obtained by controlled vacuum dehydration of D-tartaric acid at heat between 150 and 170°C. It is a polyester of tartaric acid whose main components are ditartaric monoester and diester.

Its efficiency depends on its degree of esterification. In aqueous solutions such as wine, the protective effect is not stable, as the product tends to hydrolyse slowly over time, forming tartaric acid again, which may entail even greater precipitation. This product therefore limits its use to wines with a rapid turnover and in any case not intended for storage and preservation as it prevents tartaric precipitation for a maximum of 9 months. This loss of effectiveness is greater the higher the temperature and the lower the pH. It is used at the end of fermentation and just before bottling. It should not be used in hot bottling, because its hydrolysis is enhanced at high temperatures. The metatartaric acid impedes the growth and precipitation of crystalline nuclei, thus inhibiting the appearance of tartaric precipitates in the bottle. The mechanism of inhibiting metatartaric acid on wine tartrates is explained by the fact that it forms a barrier around the crystallisation nuclei, which prevents the approach of insolubilised tartrate molecules and therefore the formation or rather the growth of crystals. When the protection is inadequate and the insolubilisation conditions of the tartrates are suitable, then the phenomenon of partial inhibition can occur, resulting in the formation of anomalous and irregularly shaped tartrate crystals.

Another methodology is carboxymethyl cellulose (CMC), which has been questioned for several years until it was authorised for oenological use (OENO Resolution 2/2008). It involves a somewhat complicated preparation methodology. CMC was authorised by the European Community in 2009 as an alternative to traditional electrodialysis or cold treatments used for tartaric stabilisation of wines. It can completely replace cold treatment. It prevents the formation of KHT crystals, with doses of 5 g/hL. Costs in product and handling are involved.

This cellulose derivative, extracted only from wood destined for oenology (to avoid risks of product contamination by a source of genetically modified organisms (GMO) that can come from cotton) and from sustainably managed forests, has been used for decades in a large number of food preparations (E468). It has the advantage of being completely organoleptically neutral and very effective in stabilising wines against KHT. Its action is known to be effective for at least 4 years. Although it is a costly technique, several researchers have demonstrated that CMC is an excellent alternative, far superior to metatartaric acid which hydrolyses over time.

CMC is a crystallisation inhibitor. Its mechanism of action is still the subject of hypothesis. It is assumed that, as soon as crystals start to form, CMC is deposited on some faces and the K or bitartrate ions can no longer make the crystal grow. It is added after filtration.

CMC is recommended mainly for white and rose wines. In red wines, there is a risk of a loss of colloidal materials, so it is necessary to carry out specific tests to avoid problems after bottling. It can be said that the richer the wines in polyphenols, the higher the risk of turbidity formation.

Like any other additive technique, CMC is active on the tartaric acid salt to a certain extent. Compared to KHT, it is less active with CaT, but there is activity. It is necessary to know that if the wine is unstable with respect to the two tartaric salts KHT and CaT and if the instability with respect to KHT is very high, the CMC added to the wine will be mobilised to prevent the formation of these crystals and it will therefore be less available to inhibit the crystallisation of CaT.

Due to its molecular structure, CMC behaves similarly to metatartaric acid, as a protective colloid; it bonds to the surface of dissolved KHT preventing crystal growth; but its advantage is that it is not temperature sensitive.

The use of mannoproteins is another methodology, so the yeast mannoproteins constitute the second large family of polysaccharides naturally present in wine.

In April 2006, the EC authorised the use of mannoproteins in the vine and wine sector (OIV, 2006). It represents a natural alternative to current treatments. Its use reduces water and energy consumption. Its liquid form allows it to be added directly to the wine before bottling, thus offering optimal efficiency and treatment flexibility.

The preventive action of mannoproteins on tartaric crystallisation in wines is attracting increasing interest. However, there is still little knowledge about the diversity of yeast mannoproteins and their effect on wines. These differences are the origin of their functional properties and their effects on wine, ranging from improving the full-body feel in the mouth to inducing tartaric stability.

Mannoproteins inhibit crystal nucleation (initial stage of crystalline formations), their effect on crystalline growth is less important. Therefore, the protection of a wine against tartaric instability is effective only in the absence of crystals.

This use of mannoproteins proves to be very effective against tartaric crystallisation in wines for a period of at least 18 months.

Finally, as regards the fining process, fining agents are traditionally applied during wine production to obtain a brighter and more clarified product as a result of the removal of particles responsible for turbidity. These agents are also beneficial in softening the tannic intensity, improving the perception of mouthfeel and improving the filterability and stabilisation of the wine.

Fining also reduces protein instability, which is a great improvement, as the presence of unstable proteins in wines is currently a major concern for winemakers. In this process it is expected to remove suspended particles and certain compounds responsible for the oxidation reactions and undesirable astringency of the wine, enhancing its organoleptic characteristics and improving its visual appearance. In this case, the colour, brightness and limpidity of the wine are crucial sensory attributes that are highly valued by consumers and entail the wine being accepted or rejected. Depending on the type of wine and the desired effect, it is necessary to choose the appropriate fining agent to be applied.

The most commonly used fining agents in the wine industry can be obtained from animal proteins, vegetable proteins and inorganic compounds. These proteins reveal a great diversity of molecular masses, isoelectric points and/or surface charge densities, and depending on the conditions of each wine, they will interact differently with specific wine components.

The fining agents of proteins have the ability to form complexes with wine tannins, creating negatively charged hydrophobic colloids. In the presence of metallic cations, these colloids become insoluble and tend to precipitate, in a process of flocculation. In contrast, proteins that do not interact with tannins have a tendency to combine with particles in suspension or in colloidal solution, which are mostly negatively charged, leading also to their sedimentation. Other proteins such as caseins are insoluble in the low wine pH, so they tend to coagulate and flocculate. However, to induce their precipitation and wine clarification, the presence of tannins is required. At the same time, they are able to bond and, therefore, eliminate phenolic compounds that affect the colour and flavour of wines.

Although these fining agents appear to be highly effective in stabilising and clarifying wine, some of them may endanger the health of the consumer.

For example, milk casein and ovalbumin from hen's egg white, both from origin. This type of fining agent belongs to the "hidden allergens", which are allergenic ingredients present in complex foods and which cannot be recognised by the ordinary consumer. This fact raises a number of consumer concerns, as there is a risk of food intolerances and allergic reactions, leading consumers to be more careful about the food they consume. As these issues may endanger consumer health, the European Union implemented a regulation (EU Regulation No. 1169/2011) requiring the labelling of all substances and products that may cause these allergies and intolerances. Subsequently, it also implemented Regulation (EC) No. 579/2012 to oblige labelling of all milk- and egg-based fining treatments and egg-based products used in grape must and wine. The application of these regulations is extremely important as they provide all information to the consumer, allowing for conscious consumer choice.

On the other hand, non-protein fining agents such as polyvinylpolypyrrolidone (PVPP), bentonite, activated carbon and chitosan are now also used in wines. PVPP acts in a similar way as protein fining agents and has a very selective absorption of phenolic substances, specifically anthocyanins and catechins, reducing their quantity in the wine. For example, polyphenols are essential components of red wines; however, when excessive, they can cause undesirable characteristics such as bitterness and astringency. Although it is not usually applied in red wines, PVPP improves the colour and brightness of the wine, reducing its bitterness, without removing its aroma. As for bentonite, it is a cation exchanger clay which carries a net negative charge and therefore interacts electrostatically with the positively charged proteins, to the wine pH. When added to wine, it removes unstable proteins. However, the action of bentonite seems not to be specific to proteins as it also removes other species or charged aggregates that may be beneficial molecules for the aroma and colour of the wine. This contributes to the loss of sensory quality that is often claimed in bentonite-treated wines, and treatments with this fining agent can entail a large loss of wine volume, from 5% to 20%, such as bentonite lees. In addition, bentonite poses a number of environmental problems, as it is associated with occupational health risks, including dust inhalation, and the disposal of hazardous bentonite waste.

Due to the health problems related to animal protein agents and the high environmental impacts of bentonite and PVPP, the need to find a different approach based on substances that do not endanger consumer health has become a major challenge. To overcome this concern, yeast protein extracts (YPE) obtained from wine and grape endogenous yeasts seem to be a potential alternative. In fact, several studies show that the application of new fining treatments based on yeast derivatives improved wine quality by reducing its turbidity and astringency.

Yeast protein extracts are not classified as food allergens by European laws and, since 2013, clarification of grape must and wine is allowed within the European Union (EC Regulation No. 144/2013). The application of YPEs as fining agents is also permitted by the International Organisation of Vine and Wine (OIV) [resolutions OIV-OENO 416-2011 and OENO 417-2011] and it established a monograph [resolution OIV-OENO 452-2012] offering a new alternative to the wine sector.

Yeast protein extracts can be obtained from different components of yeasts, such as cytoplasm, vacuole or the cell wall and are applied during the winemaking process for different purposes. For example, in several yeast species, including Saccharomyces cerevisiae, the protein extraction occurs from the cell wall, because it is composed of an outer layer of highly glycosylated mannoproteins bound covalently to an amorphous matrix of β-glucans from the inner layer of the wall. However, mannoproteins show a lower binding affinity to wine tannins compared with non-glycosylated proteins. Therefore, given that the presence of polysaccharides and mannoproteins can inhibit the precipitation of the proteins of the fining agent with the wine compounds, in particular with the tannins.

Therefore, it may be crucial to develop protein extracts derived specifically from the soluble extract after the total degradation of the cytoplasmic content and the elimination of the cell walls.

### DESCRIPTION OF THE INVENTION

The method that is recommended for astringency reduction, nutrition in wine fermentation processes, tartaric stabilisation and wine clarification solves the above-mentioned problems in a very satisfactory way, in each and every one of the above-mentioned aspects.

The use of lactic acid bacteria lysates is natural as it is a constituent part of the grape itself, but lactic acid bacteria lysates have never before been used to overcome the problems of astringency, nutrition and clarification in the food sector.

To this end, and more specifically, the method of the invention consists of the application and use of lactic acid bacteria lysates in the food sector and in particular in the oenological sector.

This invention is based on the fact that lactic acid bacteria, naturally present in wine, possess a low Z potential (negative charge) in their membrane, presenting high reactivity, with an affinity to bond free tannins with a positive charge in such a way that they are retained thus preventing their binding with salivary proteins, also with a negative charge.

Lactic acid bacteria lysates have been found to have a higher binding affinity to tannins. More specifically, lactic acid bacteria lysates compared to yeast lysates have a higher negative Z-potential or a higher negative charge expressed in millivolts, since unlike yeasts, they have two sheaths namely the peptidoglycan and cell wall, both of which are negatively charged, unlike yeasts, which only have a cell wall.

Thus, the use of lactic acid bacteria lysates, which to date had never been postulated for these applications or had never been assessed, presents a competitive advantage over those currently used, such as yeast lysates or autolysates or their cell wall mannoprotein fractions.

Consequently, the invention focuses on the use of lactic acid bacteria lysates, lactic acid bacteria autolysates or peptidoglycan proteins (which yeast does not possess) or cell wall of lactic acid bacteria for use in applications such as astringency, tartaric stabilisation or clarification.

Experimentally, to solve the problem of astringency, it has been possible to verify how this process significantly reduces astringency both at a quantitative level of free tannins (direct measurement) and at a qualitative level, organoleptically, by comparing it with a check or negative control and also with commercial products that are currently used or positive controls.

The use of lactic acid bacteria lysates for the correction of astringency solves in a timely and efficient way what has been proposed so far by the wine industry.

The product described as lactic acid bacteria lysate will be available either as a liquid or as dry powder.

On the other hand, the use of lactic acid bacteria lysates, the same as yeast lysates, solves the problem of wine nutrition having proven how the use of lactic acid bacteria lysates offers a unique nitrogenous material never before available for this purpose, which offers regular and safe fermentation kinetics, enhancing at the same time the sensory profile, producing limpidity of the aromatic matrix.

With regard to nutrition in the production process in the oenological industry, lactic acid bacteria lysates, consisting of amino acids, proteins, polysaccharides and specific nucleic acids, represent a unique source of nitrogenous compounds for fermentation processes in the food industry, in particular in the oenological industry. Thus, the amino acids are aromatic precursors, and the proteins and polysaccharides are involved in the sensory matrix by providing structure and weight in the final product as well as increasing glyceric sensations and limpidity by reducing sulphur traces.

Due to their high negative Z potential charge, lactic acid bacteria lysates are able to stabilise wines tartarically, as their ability to bond with K+ and Ca2+ cations favours this binding, so that the potassium cation and calcium cation are retained, preventing their binding with tartaric acid as well as preventing the ormation of potassium bitartrate crystals and neutral calcium tartrates, thereby stabilising the wine against the precipitation of tartrate salts.

Finally, and with regard to the clarification process, and as mentioned in the previous sub-processes, the high negative charge of the lactic acid bacteria lysates enables the purification of certain proteins or the formation of protein complexes once the cellular rupture of the lactic acid bacteria has been carried out and the formation of protein complexes obtained from the clarified part of the lees generated with different molecular screening methods for their application in the clarification of wines due to binding and successive sedimentation through the interaction with proteins in wine positively charged at wine pH that can form larger structures of high molecular weight and that can precipitate together with the binding of some cations present in the wine.

These different lysates, proteins, glycoproteins of lactic acid bacteria as well as mannoproteins in yeasts can act as an effective substitute/alternative for fining agents, stabilisers at the protein level once the wine is finished, due to the fact that lactic acid bacteria have a higher negative Z potential and therefore a higher net negative charge, so the use of either total lactic acid bacteria lysates or single protein or glycoprotein parts that can be extracted from them for clarification treatments will be of great benefit.

The product described as lactic acid bacteria lysate will be available either as a liquid or as dry powder.

In short, the novelty of the invention focuses on the use of a multitude of different genera, species and strains of lactic acid bacteria present in wine, specifically the use of proteins, glycoproteins, polysaccharides or whole lysates of cell wall, peptidoglycan and cytoplasmic content in lactic acid bacteria for use against astringency, clarification, tartaric stabilisation as mentioned above, and which is of fundamental importance thanks to the high power of net negative charge of lactic acid bacteria against the yeasts.

In addition, the fact of using lactic acid bacteria in its food grade consideration, permitted in wine and naturally present in wine or grapes, does not artificially modify the intrinsic composition of the product.

### DESCRIPTION OF THE DRAWINGS

To complement the description below and in order to help gain a better understanding of the characteristics of the invention, in accordance with a preferred example of its practical implementation, an example of astringency reduction by means of lactic acid bacteria lysates and another of nutrition in a fermentation process will be proposed, accompanied as an integral part of said description by a set of drawings in which the following have been represented for illustrative and non-limiting purposes:

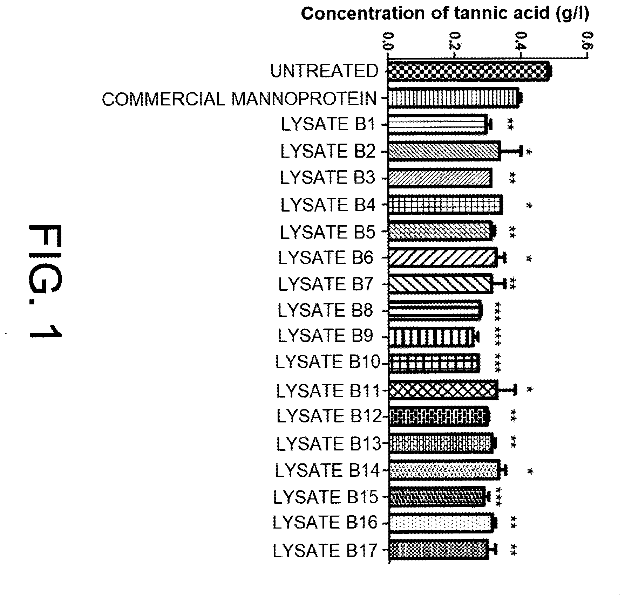

Figure 1. Tannic acid concentration (g/L) after treatment of the wine for 28 days. The results shown are the mean of two replicates carried out under the same conditions ± standard deviation (error bars). The asterisks (*) indicate statistically significant differences at p≤0.05 (*), p≤0.01 (**) or p≤0.001 (***) between wine treated with mannoprotein (positive control) and lactic acid bacteria lysates compared to untreated wine according to Tukey's test, showing how lactic acid bacteria lysates decrease astringency to a greater extent due to their ability to reduce the amount of tannins.

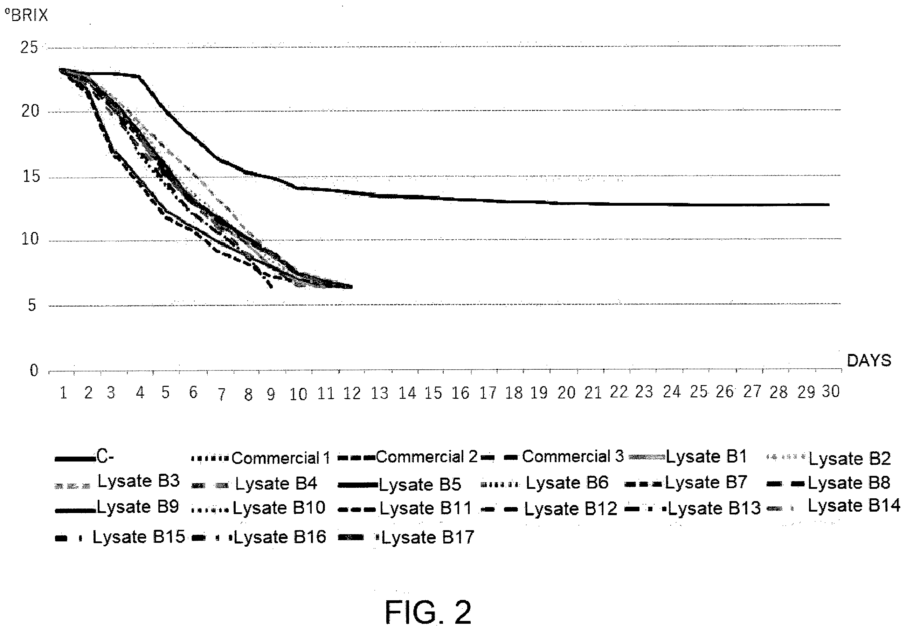

Figure 2. Fermentation kinetics of an oenological process with lactic acid bacteria lysates compared to current commercial proposals based on yeast fragments and compared to a check (C-), showing how the fermentation kinetics is not modified when nutrients based on lactic acid bacteria lysates are introduced compared to those obtained when commercial nutrients based on autolysates or yeast extracts are introduced.

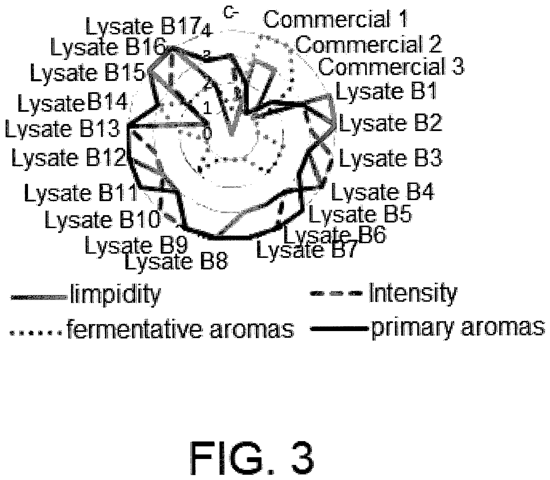

Figure 3. Tasting diagram of a must fermented with organic nutrition based on lactic acid bacteria lysates and commercial proposals for organic nutrition based on yeast fragments, where it can be seen that lactic acid bacteria lysates achieve profiles equivalent to or better than those obtained with the commercial nutrients used.

### PREFERENTIAL EMBODIMENT OF THE INVENTION

In view of the above figures, and by way of example or study, the neutralising effect of the bacterial lysates against the reactive tannins in wine responsible for astringency is analysed.

In this sense, yeast lysates or lees have a neutralising effect on tannins in the phase of refining or ageing on lees due to their rich composition in mannoproteins and other membrane and intracellular proteins. Bacterial cells differ in composition from yeast cells; therefore the aim was to determine whether bacterial proteins and peptidoglycans are equally or more reactive to tannin free radicals, causing their precipitation.

To do this, the total protein concentration of the negatively charged lysates was determined and a finished wine was treated with the different bacterial lysates at an equal protein concentration for one to four weeks. After the treatment time, the reactive tannin concentration present in the treated wine was determined with respect to the untreated wine.

The refinement treatment was carried out on finished red wine of the Tinta Fina variety.

Due to the high reactive tannin concentration naturally present in the seeds, one litre of wine was macerated for 3 days at 20°C with 40 crushed seeds and diluted with 4 litres of wine. The initial biochemical parameters of the wine-sample (red wine matrix) are given in table 1.

**Table 1 Biochemical parameters of the red wine matrix.**

| pH: 3.59 | Acetic acid 0.59 mg/L | Lactic acid 1.08 g/L | Malic acid 0 g/L | Assimilable nitrogen 42 mg/L |
|---|---|---|---|---|
| Free sulphur 21 mg/L | Glycerol 0.01 g/L | Glucose 0.01 g/L | ICM: 11.512 | IPT: 64 |

Bacterial lysates were produced by heat treatment. The lactic acid bacteria selected are given in table 2.

**Table 2. Species, strains and lysates generated for the study.**

| SPECIES | NAME OF LYSATE GENERATED |
|---|---|
| *Leuconostoc mesenteroides* | LYSATE B1 |
| *Lactobacillus cacaonum* | LYSATE B2 |
| *Lactobacillus plantarum* | LYSATE B3 |
| *Lactobacillus brevis* | LYSATE B4 |
| *Lactobacillus psittaci* | LYSATE B5 |
| *Lactobacillus senmaizukei* | LYSATE B6 |
| *Lactobacillus hilgardii* | LYSATE B7 |
| *Lactobacillus plantarum* | LYSATE B8 |
| *Lactobacillus brevis* | LYSATE B9 |
| *Leuconostoc mesenteroides* | LYSATE B10 |
| *Lactobacillus cacaonum* | LYSATE B11 |
| *Pediococcus damnosus* | LYSATE B12 |
| *Lactobacillus lactis* | LYSATE B13 |
| *Oenococcus oeni* | LYSATE B14 |
| *Lactobacillus brevis* | LYSATE B15 |
| *Pediococcus cellicola* | LYSATE B16 |
| *Leuconostoc pseudoficulneum* | LYSATE B17 |

The protein concentrations of each lysate were measured by the BCA method and the treatment dose of each lysate was adjusted according to the total protein concentration of a commercial lysate at a dose of 0.1 ml per litre of wine, whose total protein concentration is 23.7 milligrams of protein per millilitre of lysate. In other words, the protein concentration with which the wine was treated is the same for all lysate treatments.

The lysate treatment was compared to commercial yeast-based mannoprotein controls with the same dose in total protein and was also compared to an untreated control.

The wine treatment was carried out in test tubes containing 15 ml of wine into which the treatment was added and hermetically sealed with no headroom. The treatment was carried out in a climate test chamber with controlled temperature at 20 °C. Initial reactive tannin measurements, as well as measurements at seven and twenty-eight days of treatment were carried out using the modified Llaudy method.

The results shown were obtained by comparing each treated sample with the untreated sample. Analysis of variance (ANOVA) was used to detect statistical differences between samples using the GraphPad PRISM tool. The statistical significance of each one was considered at p□0.05 according to Tukey's test.

The results obtained are as follows:
The wine sample processed with seeds to increase reactive tannin and astringency sensation had a tannic acid of 0.56 g/L at initial time. At seven days, the untreated sample had a concentration of 0.54 g/L and at 28 days 0.48 g/L of tannic acid, that is, the tannins in the samples partially polymerised without the need for treatment.

**Table 3 Concentration and reduction of tannic acid in 7 days with respect to the control corresponding to the untreated wine (N.S.; no-significant differences).**

| Treatment | Concentration tannic acid (g/L) | Deviation standard | Reduction tannic acid (g/l) |
|---|---|---|---|
| CONTROL WITHOUT TREATMENT | 0,53 | 0,215 | - |
| COMMERCIAL CONTROL | 0,44 | 0,277 | 0,095^{(N.S)} |
| LYSATE B1 | 0,4654 | 0,007 | 0,073^{(NS)} |
| LYSATE B2 | 0,3754 | 0,033 | 0,163^{(N.S)} |
| LYSATE B3 | 0,3152 | 0,000 | 0,224^{(**)} |
| LYSATE B4 | 0,3348 | 0,099 | 0,204^{(**)} |
| LYSATE B5 | 0,3921 | 0,045 | 0,147^{(N.S)} |
| LYSATE B6 | 0,5414 | 0,012 | 0,000^{(N.S)} |
| LYSATE B7 | 0,4603 | 0,051 | 0,079^{(N.S)} |
| LYSATE B8 | 0,4153 | 0,063 | 0,124^{(N.S)} |
| LYSATE B9 | 0,4240 | 0,051 | 0,115^{(N.S)} |
| LYSATE B10 | 0,4421 | 0,076 | 0,097^{(N.S)} |
| LYSATE B11 | 0,3812 | 0,042 | 0,158^{(N.S)} |
| LYSATE B12 | 0,3515 | 0,051 | 0,187^{(*)} |
| LYSATE B13 | 0,3515 | 0,051 | 0,187^{(*)} |
| LYSATE B14 | 0,4059 | 0,025 | 0,133^{(N.S)} |
| LYSATE B15 | 0,2942 | 0,029 | 0,245^{(***)} |
| LYSATE B16 | 0,4421 | 0,025 | 0,097^{(N.S)} |
| LYSATE B17 | 0,3823 | 0,058 | 0,157^{(NS)} |

**Table 4 Tannic acid concentration and reduction in 28 days compared to the control corresponding to the untreated wine (N.S.; no-significant differences).**

| Treatment | Concentration tannic acid (g/L) | Deviation standard | Reduction tannic acid (g/l) |
|---|---|---|---|
| CONTROL WITHOUT TREATMENT | 0,48 | 0,014 | - |
| COMMERCIAL CONTROL | 0,39 | 0.000 | 0.090^{(N.S)} |
| LYSATE B1 | 0,295 | 0,021 | 0,185^{(**)} |
| LYSATE B2 | 0,335 | 0,091 | 0,145^{(*)} |
| LYSATE B3 | 0,31 | 0,000 | 0,170^{(**)} |
| LYSATE B4 | 0,34 | 0,000 | 0,140^{(*)} |
| LYSATE B5 | 0,31 | 0,014 | 0,170^{(**)} |
| LYSATE B6 | 0,325 | 0,035 | 0,155^{(*)} |
| LYSATE B7 | 0,31 | 0,056 | 0,170^{(**)} |
| LYSATE B8 | 0,275 | 0,007 | 0,205^{(***)} |
| LYSATE B9 | 0,255 | 0,021 | 0,225^{(***)} |
| LYSATE B10 | 0,27 | 0,000 | 0,210^{(***)} |
| LYSATE B11 | 0,325 | 0,077 | 0,155^{(*)} |
| LYSATE B12 | 0,295 | 0,007 | 0,185^{(**)} |
| LYSATE B13 | 0,31 | 0,014 | 0,170^{(**)} |
| LYSATE B14 | 0,33 | 0,028 | 0,150^{(*)} |
| LYSATE B15 | 0,285 | 0,021 | 0,195^{(***)} |
| LYSATE B16 | 0,31 | 0,014 | 0,170^{(**)} |
| LYSATE B17 | 0,295 | 0,035 | 0,185^{(**)} |

As can be seen, due to the higher negative Z potential, the reduction in all cases with any genus of lactic acid bacteria was greater in tannic acid compared to the commercial lysate of top-range yeast mannoprotein that is sold and recommended for this purpose.

Therefore extending this fact, it can be concluded that the specific lysates used in the practical example are in no way limiting, the invention being applicable to any lysate of lactic acid bacteria, autolysates thereof or purified protein fractions of peptidoglycan or lactic acid bacteria cell wall.

As for the effect of lactic acid bacteria lysates on the decrease of tartaric crystallisation, the "pear tube test" (M. Ruiz Hernández) was carried out as follows:
- A volume of 100 cc of wine was taken in a tube.
- It was frozen for 24 hours at -18°C.
- It was left to thaw and the sediment was measured.

The wine was considered stable if the concentration of sediment was less than 0.30 cc., having obtained a volume of precipitate of 0.20 cc. in the treatment with lactic acid bacteria lysate, less than that obtained with the existing commercial mannoprotein treatments for this application and notably less than the precipitate obtained when no treatment was carried out.

Finally, and with regard to the clarification process, it was also possible to verify experimentally how the use of this type of lysates allows the purification of certain proteins or the formation of protein complexes once the cellular rupture of the lactic acid bacteria has been carried out and the formation of protein complexes obtained from the clarified part of the lees generated with different molecular screening methods for their application to wine clarification due to binding and successive sedimentation by means of interaction with positively charged wine proteins at wine pH that can form larger structures of high molecular weight and that may or may not precipitate together with the binding of some cations present in the wine.

Consequently, these different lysates, proteins, glycoproteins of lactic acid bacteria as well as mannoproteins in yeasts act as an effective substitute/alternative for fining agents, stabilising the protein level once the wine is finished, due to the fact that lactic acid bacteria have a higher negative Z potential.

## Claims

1. Method for treating musts and wines, **characterised in that** it consists of applying lysates of lactic acid bacteria or autolysates of lactic acid bacteria or purified protein fractions of peptidoglycan or of lactic bacteria cell wall during the process of obtaining wine as an astringency regulating agent, as an agent for nutrition in fermentation processes, as a tartaric stabilisation agent and/or as a clarifying agent.

2. Method for treating musts and wines, according to claim 1, **characterised in that** the species of lysates of lactic acid bacteria used during the procedure are any one or a combination of the following:
• *Leuconostoc mesenteroides.*
• *Lactobacillus cacaonum.*
• *Lactobacillus plantarum.*
• *Lactobacillus brevis.*
• *Lactobacillus psittaci.*
• *Lactobacillus senmaizukei.*
• *Lactobacillus hilgardii.*
• *Lactobacillus plantarum*
• *Lactobacillus brevis*
• *Leuconostoc mesenteroides*
• *Lactobacillus cacaonum*
• *Pediococcus damnosus.*
• *Lactobacillus lactis.*
• *Oenococcus oeni.*
• *Lactobacillus brevis.*
• *Pediococcus cellicola.*
• *Leuconostoc pseudoficulneum.*

3. Product for treating musts and wines, pursuant to the method of claim 1, **characterised in that** it consists of a product in liquid or dry powder form, based on lactic acid bacteria lysates, lactic acid bacteria autolysates or purified protein fractions of peptidoglycan or of lactic bacteria cell wall, intended to reduce astringency in wine.

4. Product for treating musts and wines, pursuant to the method of claim 1, **characterised in that** it consists of a product in liquid or dry powder form, based on lactic acid bacteria lysates, lactic acid bacteria autolysates or purified protein fractions of peptidoglycan or of lactic bacteria cell wall, for nutrition in fermentation processes in musts and wine.

5. Product for treating musts and wines, pursuant to the method of claim 1, **characterised in that** it consists of a product in liquid or dry powder form, based on lactic acid bacteria lysates, lactic acid bacteria autolysates or purified protein fractions of peptidoglycan or of lactic bacteria cell wall, for tartaric stabilisation of wine.

6. Product for treating musts and wines, pursuant to the method of claim 1, **characterised in that** it consists of a product in liquid or dry powder form, based on lactic acid bacteria lysates, lactic acid bacteria autolysates or purified protein fractions of peptidoglycan or of lactic bacteria cell wall, for clarifying wine.
